# EUROPÄISCHE PATENTSCHRIFT

(11) **EP 2 282 628 B1**
(45) Veröffentlichungstag und Bekanntmachung des Hinweises auf die Patenterteilung: **10.08.2016**
(21) Anmeldenummer: 09703501.8
(22) Anmeldetag: 26.01.2009
(51) Int. Cl.: A01G 31/00, A01G 9/10

(54) **BODENHILFSSTOFF**
SOIL ADDITIVE
ADJUVANT POUR SOLS DE CULTURE

(30) Priorität: 25.01.2008 AT 1062008
(43) Veröffentlichungstag der Anmeldung: 16.02.2011
(73) Patentinhaber: Cleantech Invest Ag, 9492 Eschen (LI)
(72) Erfinder: ZUMTOBEL, Martin, A-6850 Dornbirn (AT)
(74) Vertreter: Secklehner, Günter
(86) Internationale Anmeldenummer: PCT/AT2009/000025
(87) Internationale Veröffentlichungsnummer: WO 2009/092127

(56) Entgegenhaltungen:
- EP-A- 0 518 963
- WO-A-03/000621
- DE-A1- 10 339 178

## Beschreibung

Die vorliegende Erfindung betrifft einen Bodenhilfsstoff zur Speicherung von Flüssigkeiten, insbesondere Wasser, und ein Verfahren zu dessen Herstellung sowie deren Verwendungen.

Es ist bekannt, dass Hilfsstoffe, welche beispielsweise in Düngemittel oder anderen Pflanzensubstraten beigemengt werden, Bindemittel enthalten können, welche wenn sie in Kontakt mit Pflanzen gelangen einerseits das Pflanzenwachstum negativ beeinflussen können und andererseits das Düngemittel oder Pflanzensubstrat selbst negativ beeinflussen und beispielsweise eine Verklumpung verursachen können.

Die Kultivierung von Pflanzen bringt vor allem in sandigen Böden unter ariden oder semiariden Bedingungen große Probleme mit sich, weil das Wasser sehr rasch absinkt und somit den Wurzeln nicht mehr zur Verfügung steht. Ein wesentlicher Faktor für den Erfolg des Pflanzenwachstums und somit eines hohen Ertrags ist die Wasserspeicherkapazität des Bodens und des pflanzenverfügbaren Anteils, da die Nährstoffaufnahme und die Wurzelbildung der Pflanzen entscheidend vom Wasser- bzw. Nährlösungsgehalt des Bodens abhängen. Neben der Wasserversorgung sind auch die Durchlüftung und Sauerstoffversorgung der Wurzeln wesentliche Faktoren, die die Entwicklung der Pflanze, insbesondere der Wurzeln, beeinflussen.

Es ist bekannt dem Boden vor allem zur Erhöhung der Rückhaltefähigkeit von Wasser oder wässrigen Lösungen Copolymerisate zuzusetzen. Derartige Bodenkonditionierungsmittel bestehen aus einem Copolymerisat von Acrylamid und einem Salz der Acrylsäure, das mit Methylenbisacrylamid vernetzt ist, sowie Bodenverbesserungsmittel auf der Basis Polyacrylamiden, die keine ionischen Gruppen besitzen.

Nachteilig bei den bekannten Bodenkonditionierungsmitteln ist, dass entweder eine nicht ausreichend hohe Absorptionskapazität vorliegt bzw. dass die Absorptionskapazität bei Verwendung von salzhaltigen, wässrigen Lösungen anstelle von reinem Wasser stark absinkt. Vor allem in ariden Gebieten ist es oft üblich, die Pflanzen auch mit salzhältigem Wasser, das neben Alkali- und Erdalkaliionen auch mehrwertige Metallionen enthält, zu bewässern, sodass somit eine starke Verminderung der Absorptionskapazität eintritt.

Ein zusätzlicher Nachteil der bekannten Bodenkonditionierungsmittel liegt ferner darin, dass bei Beregnung mit salzhältigem Wasser.auch ihre Absorptionskapazität für in späteren Beregnungszyklen eingesetztes reines Wasser stark und teilweise irreversibel, abnimmt.

Aus der EP 0 415 141 B1 ist beispielsweise ein Bodenkonditionierungsmittel bekannt, welches ein hohes Rückhaltevermögen für Wasser und Salzlösungen aufweist und auch bei einer wiederholten Absorption von Salzlösungen ein- oder mehrwertiger Kationen ein gutes Rückhaltevermögen für Wasser und Salzlösungen zeigt. Dabei werden Copolymerisate auf Acrylamidbasis, die Sulfonsäuregruppen anstelle von bzw. zusätzlich zu Carboxylgruppen aufweisen, verwendet.

Aus der EP 0 518 963 B1 ist eine Speichervorrichtung für Flüssigkeiten aus einem Trägermaterial aus anorganischem oder organischem Material bekannt, das mit einem Feuchtigkeitsabsorber überzogen ist. Dieser Feuchtigkeitsabsorber ist aus einem Gemisch aus pulverförmigen feuchtigkeitsabsorbierenden Polymer, Wasser und pulverförmigen, anorganischen silikatischen Material, insbesondere Gesteinsmehl, gebildet.

Die WO 03/000621 A1 beschreibt feingemahlenes Eruptivgestein eingebunden in ein schwammartiges Hydrogel als Nährstoffangebot für Pflanzen. Das gemahlene Eruptivgestein weist vorzugsweise Partikelgrößen unter 100 µm auf. In die Poren und Taschen können unterschiedliche Füllstoffe eingebracht werden. Wässrigen Monomerlösungen kann ein Vernetzter in einer Menge von 0,01 % bis 5 % bezogen auf die Gesamtheit der polymerisierbaren Monomere zugesetzt werden. Nach der Herstellung kann eine Zerkleinerung erfolgen, wobei im herstellungsfrischen Zustand eine gewisse Klebrigkeit vorhanden ist, die zum Zusammenpressen der Krumen genutzt werden kann.

Einführen sei festgehalten, dass in den unterschiedlich beschriebenen Ausführungsformen gleiche Teile mit gleichen Bezeichnungen versehen werden, wobei die in der gesamten Beschreibung enthaltenen Offenbarungen sinngemäß auf gleiche Teile mit gleichen Bezeichnungen übertragen werden können. Auch sind die in der Beschreibung gewählten Lageangaben, wie z.B. oben, unten, seitlich usw. nur relativ und sind bei einer Lageänderung sinngemäß auf die neue Lage zu übertragen. Weiters können auch Einzelmerkmale oder Merkmalskombinationen aus den beschriebenen unterschiedlichen Ausfilhrungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Sämtliche Angaben zu den Mengen der einzelnen Komponenten sind als Gew.-% zu verstehen.

Aufgabe der vorliegenden Erfindung ist es, einen einfach anwendbaren Bodenhilfsstoff in Granulatform zur Verfügung zu stellen, der eine ausgezeichnete Speicherkapazität für pflanzenverfügbare Flüssigkeiten aufweist und zudem eine verbesserte Haltbarkeit über einen größeren Zeitraum zeigt.

Die Aufgabe der Erfindung wird durch einen Bodenhilfsstoffzur Speicherung von pflanzenverfügbaren Flüssigkeiten, insbesondere Wasser, gelöst, der die Merkmale des Anspruchs 1 aufweist Der Bodenhilfsstoff umfasst zumindest ein Trägermaterial, das eine Gesteinsmehlmischung ist, ein Mineralgemisch ist oder aus einer einzigen Gesteinsmehlart gebildet ist, ein Absorberprodukt, einen Quellstoff, ein Binde- und Gleitmittel, gegebenenfalls ein Düngemittel, Ergänzungsstoffe, insbesondere mikrobiologischen oder mykotischen Ursprungs, sowie Pflanzenschutzmittel, wobei das Binde- und Gleitmittel Glycerin ist und dadurch die Bestandteile des Bodenhilfsstoffs kompaktierbar sind. Die vorliegende Komposition des Bodenhilfsstoffes (Composite Produkt) stellt sicher, dass die Wirkungen, wie gleichmäßige Feuchtigkeitsspeicherung und Feuchtigkeitsabgabe, Nährstoffspeicherung und Nährstoffabgabe sowie Speicherung und Abgabe von wasserlöslichen Pflanzenschutzmittel, auch über einen längeren Zeitraum aufrecht erhalten bleiben.

Zudem erweist sich von Vorteil, dass der Bodenhilfsstoff ein Vielfaches seines Gewichts an Flüssigkeit speichern kann.

Weiters erweist sich durch die Zugabe von Binde- und Gleitmitteln von Vorteil, dass sich der Bodenhilfsstoff trocken einfach kompaktieren bzw. auf eine andere beliebige Form verpressen lässt und dadurch ein Verklumpen bzw. Verkleben des Granulats verhindert werden kann.

Durch die Konsistenz des erfindungsgemäßen Bodenhilfsstoff wird auch eine homogene Ver-mischbarkeit mit dem erdigen bzw. sandigen Bodenmaterial erreicht.

Von Vorteil ist auch, dass durch den Quellstoff eine verzögerungsfreie Verteilung des Boden-hilfsstoffs in der vorhandenen Bodenstruktur stattfindet, ohne diesen in seiner Funktion zu verändern. Dieses Verhalten verhindert ein Absinken oder Aufsteigen des Bodenhilfsstoffes im Boden und führt zu einer Lagefixierung gegenüber den konstant mit Feuchtigkeit zu versorgenden Teilen, insbesondere den Wurzeln der Pflanzen.

Durch Absorption der Feuchtigkeit im Bodenhilfsstoff wird auch die Verdunstungsgeschwindigkeit der Flüssigkeit reduziert. Durch die erfindungsgemäße Zusammensetzung wird auch gewährleistet, dass die Flüssigkeit bzw. das Wasser gleichmäßig über das gesamte Volumen des Bodenhilfsstoffes verteilt wird. Auch bei einer Änderung der Elektrolytkonzentration bleibt die Absorptionsfähigkeit des Bodenhilfsstoffes gegenüber Wasser im Wesentlichen unverändert.

Vorteil des erfindungsgemäßen Bodenhilfsstoffes ist außerdem, dass es sich um ein Konzentrat mit geringem Volumen und wenig Gewicht handelt, das zur Einmengung in Pflanzsubstrate jeglicher Art, z.B. auf organischer oder mineralischer Basis verwendet werden kann. Eine folglich relativ geringe Anwendungsmenge im Verhältnis zum Volumen des zu behandelnden Substrates oder Bodens unterstreicht die Wirtschaftlichkeit des Bodenhilfsstoffes.

Vorteilhaft erweist sich zudem, dass der erfindungsgemäße Bodenhilfsstoff ein ausgeglichenes Verhältnis von Wasser, Luftporen und Nährstoffgehalt ermöglicht und begünstigt somit ein ökologisches Gleichgewicht sowie die Symbiose zwischen Pflanzen und Mikroorganismen.

Weitere Vorteile bietet der Bodenhilfsstoff bei der Herstellung von künstlichen Pflanzenerden durch Vermengung mit beispielsweise mineralischen Gerüststoffen wie Schotter, Split, Sand, Blähton, Lava, Ziegelsplitt, ziegelartige Granulate, Silikate, Steinwollfasem, Bimskies, Perlit, Vermikulit, Steine bzw. ähnlichen Materialien oder organischen Strukturstoffen wie z.B. Torf, Komposten aus Rinde, Kokosfasern, etc. sowie Substraten für Hydrokultur Systeme usw.

Die erfindungsgemäßen Trägerstoffe zeigen den Vorteil, dass sie gleichzeitig zur Bodenver-besserung bzw. Düngung herangezogen werden können. Einige Trägermaterialien sind sogar quellfähig. Auch durch den Abbau, insbesondere mikrobiellen Abbau, bestimmter Träger-materialien können Nährstoffe, wie beispielsweise Kieselsäure, pflanzenverfügbar freigesetzt werden. Gelöste Kieselsäuren sind durch ihren Verklebungseffekt von Tonteilchen und darüber hinaus auch für eine gute Krümelbildung und damit eine gute Luftkapazität verantwortlich. An den Phasengrenzflächen solch quellfähiger Silikate entsteht durch eine besondere molekulare Orientierung der dipolartigen Wassermoleküle eine höhere Acidität, welche den Säure-Basen-Haushalt im Boden puffert und gleichzeitig die Sorptionsfähigkeit gegenüber Kationen erhöht.

Trägerstoffe aus Gesteinsmehlmischungen können aus einem Mineralgemisch aus Feldspat, insbesondere Alkalifeldspat, Plagioklas, Quarz, Biotit und Disthen, Granat und Silimanit gebildet sein, wodurch eine kostengünstige Variante für die Bildung des Trägermaterials zur Verfügung steht.

In einer alternativen Ausführungsform umfasst das Trägermaterial Gesteinsmehl oder eine Gesteinsmehlmischung aus Zeolith, silikatischem Gesteinsmehl, Urgesteinsmehl, Diabas Steinmehl, vulkanisches Gesteinsmehl (z.B. Eifelgold), etc., wobei eine hohe mechanische Beständigkeit des Bodenhilfsstoffs gegenüber diversen Beanspruchungen gegeben ist.

Durch das ausgewählte Trägermaterial wird auch gewährleistet, dass sich der Boden nicht zusehends verdichtet oder übermäßig Unkraut an der Oberfläche bildet. Pflanzen können sich derart fest in der Erde verankern, dass sie auch nach starken Regengüssen windfest sind.

Durch die Auswahl der Gesteinsmehlmischungen werden mit der Abgabe der Flüssigkeit teilweise auch Spurenelemente den Pflanzen zugeführt. Wird Nährflüssigkeit von den Pflanzen benötigt, so werden Nährstoffe und Spurenelemente zugeführt, wobei bei einem geringen Flüssigkeitsverbrauch geringere Mengen zugeführt werden. Dabei erfolgt eine Abstimmung der an die Pflanze weitergegebenen Spurenelemente in Abhängigkeit von deren Wasserverbrauch.

Das Trägermaterial kann eine Korngröße ausgewählt bis zu einer oberen Grenze von 1 mm, vorzugsweise 0,8 mm, insbesondere 0,5 mm, aufweisen. Durch die feinkörnige Struktur entsteht eine sehr große Oberfläche, die einen guten Übergang der Feuchtigkeit auf eine Vielzahl feiner Wurzeln ermöglicht. Die ausgewählte Korngröße hat einerseits den Vorteil, dass sie in der Lage ist, ihr Volumen zu vervielfachen, indem Flüssigkeit gespeichert wird und andererseits durch ihre Verformbarkeit auch eine ausreichende Durchlüftung der Pflanzerde und somit eine ausreichende Belüftung der Wurzeln der eingesetzten Pflanze und somit eine ausreichende Sauerstoffzufuhr in den Wurzeln gewährleistet ist.

Die Menge des Trägermaterials ist aus einem Bereich mit einer unteren Grenze von 10%, vorzugsweise 25 %, insbesondere, 30 %, und einer oberen Grenze von 90 %, vorzugsweise 85 %, insbesondere 75 %, ausgewählt, womit der Hauptbestandteil des Bodenhilfsstoffes in den meisten Fällen vom kostengünstigen Trägermaterial gebildet ist.

Als Absorberprodukte können quellfähige Produkte aus einer Gruppe umfassend unterschiedliche Formen von Zellstoffen, Silikatgelen, Silikaten, Polymeren, Polyacrylamiden, Acrylsäuren, etc. und deren physikalischen und chemischen Kombinationen fungieren, wodurch relativ große Mengen an Flüssigkeit gespeichert werden können und somit über einen langen Zeitraum eine kontinuierliche Abgabe der Flüssigkeit an die Pflanzen bzw. Wurzeln gewährleistet wird. Die Absorberprodukte sind vorzugsweise kolloid im Bodenhilfsstoff verteilt. Dazu kommt, dass das Absorptionsmaterial durch die Vermengung mit den anderen zusätzlichen Bestandteilen eine gute Benetzungsfähigkeit erhält.

Wird beispielsweise das Absorberprodukt aus einem Polymer in Salzform gebildet, so werden negative Auswirkungen auf über derartige Absorberprodukte mit Feuchtigkeit versorgte Pflanzen verhindert. Die Langzeitwirkung eines derartigen Absorberprodukts reicht über viele Jahre, da insbesondere organosynthetische Materialien kaum mikrobiell oder andersartig zersetzt werden.

Besonders vorteilhaft erweist sich auch die hohe Ionenaustauschkapazität des Absorbers, insbesondere des Absorbers in Salzform. Diese Ionenaustauschkapazität kann durch die Verwendung bestimmter Gesteinsmehle bzw. Gesteinsmehlmischungen verstärkt werden. Auch ein oftmaliger Wechsel zwischen amorphem und teilkristallinem Zustand des Absorbers beeinträchtigt dessen Lebensdauer kaum.

Die Menge des Absorberprodukts ist aus einem Bereich mit einer unteren Grenze von 0,1 %, vorzugsweise 1 %, insbesondere 2 %, und einer oberen Grenze von 80 %, vorzugsweise 70 %, insbesondere 60 %, ausgewählt, wodurch eine Abstimmung des Verhältnisses Trägermaterial zu Absorberprodukt zur Verfügung gestellt wird, um eine optimale Wirkung zu erzielen.

Als Quellstoffe können Zellstoff, Zellstoffpulver, Holzspäne, Holzrinde, Hackschnitzel, Stroh, Chemiefasern, Vliese, Matten, Polyurethan, Torf, etc. verwendet werden, die ein Aufbrechen der verpressten Partikel des Bodenhilfsstoffes bewirken und somit einen Flüssigkeitskontakt im Boden ermöglichen. Zudem ist deren Beständigkeit im Vergleich zu anorgani-schen Materialien geringer, weshalb die Quellstoffe schneller im Boden zersetzt werden und somit als Nebeneffekt rasch wirksam werdendes, organisches Düngematerial zur Verfügung stellen. Aufgrund der Porosität können diese Stoffe sowohl Träger- als auch Quellfunktion ausüben. Quellstoffe, wie verschiedene Trester oder Kokosfasern, haben auch eine starke Düngewirkung.

Liegen die Quellstoffe beispielsweise in Faserform vor, so bilden sie zudem eine armierende Wirkung bei der Verwendung des Bodenhilfsstoffes auf schrägen Flächen oder für besondere Formgestaltungen.

Die Menge des Quellstoffes ist aus einem Bereich mit einer unteren Grenze von 0,1%, vor-zugsweise 1 %, insbesondere 2 %, und einer oberen Grenze von 30 %, vorzugsweise 20 %, insbesondere 15 %, ausgewählt, wodurch bei geringem vorhandenen Porenvolumen ein gewisses Maß an Verdichtung des Bodens durch das Aufquellen des Bodenhilfsstoffes erfolgen kann aber dennoch eine ausreichende Durchlüftung und somit Sauerstoffzufuhr zu den Wurzeln gewährleistet ist. Vorteilhaft bei dieser Menge erweist sich auch, dass sich der Boden-hilfsstoff in der vorhandenen Boden- bzw. Substratstruktur verankert und nicht ausgewaschen werden kann.

Das Binde- und Gleitmittel ist für Pflanzen nicht toxisch und bevorzugt abbaubar, wodurch einerseits gewährleistet ist, dass trotz Verwendung eines Bodenhilfsstoffes das Pflanzenwachstum nicht negativ beeinflusst wird und somit durch die Verwendung von Bodenhilfsstoffen es zu keiner zusätzlichen Belastung der Umwelt kommt. In einer alternativen Ausfüh-rungsform kann das Binde- und Gleitmittel für Pflanzen auch nicht abbaubar sein.

Zudem wird ein Binde- und Gleitmittel ausgewählt, das geruchsarm ist, wodurch eine Belästigung der Individuen, insbesondere Menschen, durch unangenehmen Geruch vermieden wird.

Als Binde- und Gleitmittel wären z.B. organische Stoffe wie Stärke, Melasse, Sojamehl, etc. möglich. Erfindungsgemäß wird jedoch Glycerin verwendet, weil es die vorab erwähnten Eigenschaften aufweist und zudem ermöglicht, dass die Bestandteile des Bodenhilfsstoffs einerseits gut kompaktierbar sind und andererseits ein Verklumpen der Partikel aus bzw. mit Bodenhilfsstoff untereinander vermieden wird.

Vorteilhaft hat sich eine Menge des Binde- und Gleitmittels aus einem Bereich mit einer unteren Grenze von 0,1 %, vorzugsweise 1 %, insbesondere 2 %, und einer oberen Grenze von 20 %, vorzugsweise 15 %, insbesondere 10 %, erwiesen, wodurch sehr gute Lagereigenschaften des Bodenhilfsstoffs erzielt werden.

In einer weiteren Ausführung des Bodenhilfsstoffes können mikrobiologische Ergänzungsstoffe, also Bakterien, wie z.B. Nitrifikationshemmer oder -beschleuniger (Acotobakter) etc. und/oder Pilze und/oder Symbionten, wie z.B. Mykorrhiza, etc. bzw. Substanzen davon im Bodenhilfsstoff enthalten sein, wodurch mit deren Hilfe Nährstoffe vom Boden oder der Bodenluft zur richtigen Zeit in ausreichender Menge den Pflanzen zur Verfügung stehen. Durch die verbesserte Nährstoffversorgung können höhere Erträge realisiert werden.

Als Mineralstoffe und Spurenelemente können Aluminium, Eisen, Mangan, Magnesium, Ka-lium, Phosphor, Zink und/oder Kupfer enthalten sein, wodurch der entsprechende Mikronutrient durch den Bodenhilfsstoff zur Verfügung gestellt wird. Diese Mikronutrienten sind nicht nur für die Pflanzen von großer Bedeutung, sondern auch für Mikroorganismen, die beispielsweise den Aufbau einer natürlichen Humusschicht aus abgestorbenen organischen Materialien, wie Wurzelteilen, Mikroorganismen, etc., bewirken bzw. beschleunigen.

Die Menge des Ergänzungsstoffes kann aus einem Bereich mit einer unteren Grenze von 0,1 %, vorzugsweise 0,5 %, insbesondere 1% und einer oberen Grenze von 7 %, vorzugsweise 5 %, insbesondere 3 %, ausgewählt sein, wodurch weder eine Unter- noch eine Überversorgung mit Mikronutrienten erfolgt.

Das Düngemittel kann aus einer Gruppe umfassend Ammoniumstickstoff (NH₄-N) und/oder Nitratstickstoff (NO₃-N), Aluminiumoxid, Eisenoxid, Calciumoxid, Asche, unlösliche Sulfate, Huminsäure, Nitrifikationshemmer, Superphosphat, organisch synthetische Langzeitdünger, Kristallwasser, etc. ausgewählt sein, die sowohl in flüssiger als auch in fester Form im Bodenhilfsstoff enthalten sein können. Es wird dadurch ein verbessertes Wachstum der Pflanzen erzielt Beispielsweise kann ein flüssiges Düngemittel vom Trägermaterial gespeichert werden und kontinuierlich freigesetzt werden, wodurch ein Auswaschen des Düngemittels beim ersten Kontakt des Bodenhilfsstoffs mit Wasser vermieden wird.

Das Düngemittel kann mit anderen Bestandteilen des Bodenhilfsstoffs eine chemische Verbindung eingehen, wodurch bewirkt wird, dass chemische Bindungskräfte zwischen den einzelnen Materialien des Speicherelements auftreten. Diese Verbindungen können schwer wasserlöslich sein, wodurch derart gebildete Bodenhilfsstoffe über eine lange Zeit Nährstoffe an die Pflanzen liefern und somit schwer ausgeschwemmt werden können und somit das Grundwasser nicht belasten.

Aufgrund der hohen Absorptionskräfte des Trägermaterials ist es möglich, Düngemittel auch in flüssiger Form derart zu binden, dass diese in ihrer flüssigen Phase nicht mehr erkennbar sind.

Das Düngemittel kann sowohl den Bodenhilfsstoff als gesamtes, als auch den einzelnen Bestandteilen, wie lediglich dem Trägermaterial, dem Absorberprodukt dem Quellstoffe, dem Binde- und Gleitmittel, zugesetzt sein.

Vorteilhafterweise ist die Menge des Düngemittels aus einem Bereich mit einer unteren Grenze von 0,1 %, vorzugsweise 0,5 %, insbesondere 1 %, und einer oberen Grenze von 10 %, vorzugsweise 5 %, insbesondere 3 %, ausgewählt, wodurch einerseits eine ausreichende Menge des Düngemittels zur Verfügung steht, um das Pflanzenwachstum zu verbessern, andererseits allerdings auch nur so viel der Pflanze zur Verfügung steht, ohne dass Pflanzenschäden, wie beispielsweise Verbrennungen, verursacht werden.

Als Pflanzenschutzmittel können handelsüblich Mittel, wie Herbizide, Bakterizide, Fungizide, Insektizide, etc. enthalten sein.

Von Vorteil erweist sich ein mittlerer Durchmesser der Partikel aus bzw. mit Bodenhilfsstoff aus einem Bereich mit einer unteren Grenze von 1 mm, vorzugsweise 2 mm, insbesondere 5 mm, und einer oberen Grenze von 30 mm, vorzugsweise 20 mm, insbesondere 10 mm, wodurch ein sehr weites Einsatzgebiet des Bodenhilfsstoffs sowohl für Großanlagen, wie beispielsweise Hangbepflanzungen, als auch für den Eigenbedarf, wie beispielsweise für die Zucht von Küchenkräutern auf der Fensterbank in einer Wohnung, möglich ist. Durch die Korngröße kann die Geschwindigkeit der Nährstoffabgabe des Trägermaterials reguliert werden: Je kleiner der Korndurchmesser ist, desto schneller erfolgt die vollständige Nährstoffabgabe.

Durch eine relativ große Korngröße der Partikel kann in den gebildeten Hohlräumen ausreichend Flüssigkeit zurückgehalten werden, die dann je nach Bedarf der Pflanze an diese abgegeben wird. Ein weiterer Vorteil der großen Korngröße liegt darin, dass eine ausreichende Durchlüftung der Wurzeln von in eine derartige Pflanzerde eingesetzten Pflanzen und damit eine ausreichende Sauerstoffzufuhr zu den Wurzeln gewährleistet sind, Auch durch die Form des Trägermaterials kann erzielt werden, dass sich einzelne Teilchen gegeneinander verhaken und damit nicht zusammenrutschen und keine Verdichtung bilden, wodurch verhindert wird, dass sich das Trägermaterial bei der Zufuhr von Feuchtigkeit immer mehr verdichtet.

Bei einer kleinen Korngröße erweist sich von Vorteil, dass diese auch für rasch wachsende Pflanzen, wie beispielsweise Küchenkräuter, wie Schnittlauch, Kresse und dgl., aber auch Gras verwendet werden kann. Durch das feinkörnige Trägermaterial entsteht eine sehr große Oberfläche. Damit wird auch eine große Fläche, die mit Wasser bzw. Flüssigkeit in Kontakt treten kann, geschaffen und somit ein größeres Flüssigkeitsspeichervolumen erreicht. Zudem wird durch die große Oberfläche ein guter Übergang der Flüssigkeit auf die Vielzahl der feinen Wurzeln bei kleinen Pflanzen, insbesondere Kräutern, wie Heilpflanzen oder Gräsern, erzielt.

Das mittlere Schüttgewicht des Bodenhilfsstoffes ist aus einem Bereich mit einer unteren Grenze von 100 kg/m³, vorzugsweise 200 kg/m³, insbesondere 500 kg/m³, und einer oberen Grenze von 1000 kg/m³, vorzugsweise 900 kg/m³, insbesondere 800 kg/m³, ausgewählt, wodurch der Bodenhilfsstoff auch zu schwer zugänglichen Lagen transportiert werden kann.

Der erfindungsgemäße Bodenhilfsstoff kann sowohl als fein gemahlenes Gemenge, als Gemenge von Bestandteilen unterschiedlicher Größe als auch in Form von kompaktierten Partikeln vorliegen. Liegt der Bodenhilfsstoff vorwiegend in Pulverform vor, kann er auch als Überzug für kernförmige Trägermaterialien herangezogen werden.

In einer Weiterbildung der Erfindung kann dem Bodenhilfsstoff ein Schaumbildner beigemengt werden, wodurch der Bodenhilfsstoff aufgeschäumt wird und dadurch beispielsweise die Flüssigkeitsaufnahmekapazität steigt. Durch die Zugabe des Schaumbildners kann zudem die Porengröße beeinflusst werden, wobei allerdings bei zu großen Poren das Wasserrückhaltevermögen sinkt.

Die Porengröße des Schaums kann durch die Einmischung von Luft oder die Zugabe von Treibmittel variieren, wobei dadurch die Menge der zu speichernden Flüssigkeit durch die Steuerung der Zellgröße und der dadurch bedingten Oberflächengröße zur Aufnahme bei Anwendung des Bodenhilfsstoffes einfach gesteuert werden kann. Der Bodenhilfsstoff kann nicht nur an den Schaumbildner gebunden werden, sondern es kann auch ein Schaumbildner in den Bodenhilfsstoff eingelegt werden, wodurch beispielsweise das Quellvermögen verbessert werden kann.

Bestimmte Standorte, wie zum Beispiel schwere Böden, nährstoffarme Böden oder Extremstandorte, also vegetationsfeindliche Standorte erfordern besondere bzw. neben der Verbesserung der Wasserhaltekraft zusätzliche Behandlungsmaßnahmen. Diese können Strukturverbesserung bzw. erhöhte Nährstoffbereitstellung sein. Für solche Standorte wird zur optimalen Problemlösung der Bodenhilfsstoff mit Strukturverbesserungssubstanzen, wie z.B. Lava-, Blähton-, Blähschieferbruch etc. sowie Düngerstoffen organischer oder synthetisch organischer Natur in einem abgestimmten Verhältnis vermengt als Mischung bereitgestellt und bietet somit zusätzlich eine vereinfachte Behandlung des Vegetationsstandortes.

Die Menge der Strukturverbesserungssubstanz der Mischung kann aus einem Bereich mit einer unteren Grenze von 10 %, vorzugsweise 30 %, insbesondere 50 %, und einer oberen Grenze von 90 %, vorzugsweise 70 %, insbesondere 60 %, ausgewählt sein.

Die Menge der Düngerstoffe der Mischung kann aus einem Bereich mit einer unteren Grenze von 5 %, vorzugsweise 10 %, insbesondere 20 %, und einer oberen Grenze von 50 %, vorzugsweise 40 %, insbesondere 30 %, ausgewählt sein.

Die Menge des Bodenhilfsstoffes der Mischung kann aus einem Bereich mit einer unteren Grenze von 8 %, vorzugsweise 16 %, insbesondere 32 %, und einer oberen Grenze von 50 %, vorzugsweise 40 %, insbesondere 35 %, ausgewählt sein.

Die Aufgabe der Erfindung wird eigenständig auch durch ein Verfahren zur Herstellung des Bodenhilfsstoffes nach einem der Ansprüche 1 bis 25 umfassend die Schritte i) Vermischen der Ingredienzien, ii) Verpressen der Mischung und iii) Granulierung der verpressten Mischung gelöst. Vorteilhaft bei diesem Verfahren erweist sich, dass die Ingredienzien im Trockenzustand vermischt werden können und somit eine gleichmäßige Verteilung der Ingredienzien über das gesamte Volumen des Bodenhilfsstoffes bzw. Partikels erzielt wird. Zudem erweist sich von Vorteil, dass durch die Verpressung die Ingredienzien des Bodenhilfsstoffs kompaktiert werden und dadurch ein kleineres Volumen erzielt wird. Durch die Granulierung der verpressten Mischung wird erreicht, dass kleinere, je nach Bedarf, gewünschte Formen von Partikeln oder Granulat des Bodenhilfsstoffs hergestellt werden und zum Einsatz kommen. Von Vorteil erweist sich zudem, dass die Vermischung trocken erfolgt, und somit die Lagerfähigkeit des Produkts verbessert wird sowie durch Verhinderung der Verklebung der einzelnen Körner der maschinelle Einsatz des Granulats gewährleistet bleibt

Weiters ist vorgesehen, dass das Verpressen unter Druck, insbesondere die Kompaktierung mittels Pelletierung, Walzenkompaktierung, etc. erfolgt, wodurch standardisierte Verfahren zur Herstellung des Bodenhilfsstoffs verwendet werden können und somit keine aufwendigen und kostenintensiven Weiterentwicklungen betrieben werden müssen.

Die Granulierung des Bodenhilfsstoffs kann durch Zerkleinerung und anschließendem Brechen und Ausfiltern in ausgewählte Korngrößen erfolgen, wodurch Partikel des Bodenhilfsstoffes beliebig gewünschter Größe hergestellt werden können.

In einer alternativen Ausführungsform kann die Formulierung auch durch Auspressen durch Matrizen erfolgen, wodurch eine vordefinierte Form des Bodenhilfsstoffs hergestellt wird.

Eine weitere Alternative stellt die Granulierung über eine Formpresse dar. Aus dem Stand der Technik ist ein solches Verfahren zur Herstellung von Arzneimitteln bekannt, wobei eine Walzenkompaktiergerät mit satt aufeinander sitzenden Walzen mit Ausnehmungen bestückt ist und das zu verarbeitende Material in die Ausnehmungen einrieselt und gepresst wird.

Vorzugsweise wird der Bodenhilfsstoff in einer Konzentration von 0,1 bis 50 kg/m³ Boden eingesetzt.

In einer weiteren Verwendung kann der Bodenhilfsstoffs zur Speicherung von Nährlösungen auf Obst- bzw. Gemüseplantagen verwendet werden.

Die optimale Wirkung erzielt der Bodenhilfsstoff, wenn er bei einem pH-Wert ausgewählt aus einem Bereich mit einer unteren Grenze von 5, insbesondere 6, und einer oberen Grenze von 8,5, insbesondere 8, angewendet wird.

Der Bodenhilfsstoff kann sowohl im Pflanzballen der Pflanze enthalten sein als auch lediglich in die unmittelbare Umgebung des Wurzelballens durch mechanische Einbringung verbracht werden. Im Falle von flächigen Anwendungen, wie z.B. Rasenflächen, wird der Bodenhilfsstoff ebenfalls im Wurzelbereich bzw. unterhalb der Wurzeln mechanisch eingebracht.

Vorteilhafterweise kann für die Aufzucht von Neupflanzen, wie dies beispielsweise bei Waldaufforstungen der Fall ist, in Bereichen, in welchen die Böden durch Bodenerosion sowie mangelnde Düngerzufuhr geschädigt sind, die Pflanze mit einem Pflanzerdecontainer mit dem erfindungsgemäßen Bodenhilfsstoff geliefert werden, der für die ersten ein bis zwei Jahre eine ausreichende Wasserhaltung neben einer gezielten Nährstoffversorgung ermöglicht.

Zudem kann der erfindungsgemäße Bodenhilfsstoff auch in Kübelpflanzen Anwendung finden. Eine mögliche Verwendung des erfindungsgemäßen Bodenhilfsstoffs ist beispielsweise gemäß der Fig. 9 der EP 518 963 B1 möglich. Hier wird, wie beschrieben, die überschüssige Flüssigkeit über Öffnungen aus Pflanzenbehältern abgeleitet. Selbstverständlich ist aber auch die Anwendung von handelsüblichen Pflanzgefäßen möglich, wo die Öffnungen im Bodenbereich des Behältnisses angeordnet sind.

Weiters ist es auch möglich, den Bodenhilfsstoff für Wildbachverbauungen einzusetzen, wo beispielsweise eine Betonschicht oder andere Befestigungs- bzw. Armierungsbauteile verwendet werden.

Als weitere Anwendungsmöglichkeit kann der Bodenhilfsstoff auch zur Bepflanzung von Kläranlagen, Schwimmteichen, Brunnen, Biotopen, etc. eingesetzt werden, ohne dass eine übermäßige Versorgung mit Flüssigkeit oder eine ungewünschte Austrocknung der Pflanzen erfolgt. Sehr gut eignet sich für die Befestigung solcher Bäche, Brunnen, etc. die Verwendung von Kombeton. Durch die Verwendung eines Blähbetons bzw. Schaumbetons kann auch die Anzahl und Größe der Poren gezielt reguliert werden.

Versuche zeigten, dass der erfindungsgemäße Bodenhilfsstoff bei regelmäßiger Wassergabe über einen Zeitraum von zwei bis fünf Jahren es der Pflanze ermöglicht ausreichend mit Nährstoffen versorgt zu werden.

Weiters zeigten Versuche, dass auch der Transport von Pflanzen mit dem erfindungsgemäßen Bodenhilfsstoff die Wurzeln der Pflanzen weniger in Mitleidenschaft zieht. Zudem erfolgt eine raschere Regeneration der Wurzeln der Pflanze bei Einsetzen der Pflanzen in den erfmdungsgemäßen Bodenhilfsstoff bzw. Gemisch aus Bodenmaterial und Bodenhilfsstoff.

Im nachfolgenden werden beispielhaft Rezepturen für die Zusammensetzung des erfindungsgemäßen Bodenhilfsstoffs angeführt:

**Ausführungsbeispiel 1:**

| Komponente | Material | Gew. % |
|---|---|---|
| Trägermaterial | silikatisches Gesteinsmehl | 10,00 % |
| Absorberprodukt | Silikatgel (Silicagel) | 80,00 % |
| Quellstoff | Feine Holzspäne | 6,00 % |
| Binde- und Gleitmittel | Gips | 3,00 % |
| Ergänzungsstoff | Vermikulit | 0,40 % |
| Düngemittel | Huminsäure | 0,30 % |
| Pflanzenschutzmittel | Eisensulfat | 0,30 % |

**Ausführungsbeispiel 2:**

| Komponente | Material | Gew. % |
|---|---|---|
| Trägermaterial | Gesteinsmehlmischung | 80,00 % |
| Absorberprodukt | Superabsorber | 10,00% |
| Quellstoff | Vlies | 8,00 % |
| Binde- und Gleitmittel | Zelluloseleim | 1,00 % |
| Ergänzungsstoffe | Kalium | 0,10% |
| Düngemittel | Asche | 0,80 % |
| Pflanzenschutzmittel | Kupfersulfat | 0,10% |

**Ausführungsbeispiel 3:**

| Komponente | Material | Gew. % |
|---|---|---|
| Trägermaterial | Urgesteinsmehl | 63,00 % |
| Absorberprodukt | Acrylsäure | 22,00 % |
| Quellstoff | gemahlenes Stroh | 8,00 % |
| Binde- und Gleitmittel | Melasse | 3,00 % |
| Ergänzungsstoff | Bakterien | 0,20 % |
| Düngemittel | Nitrifikationshemmer | 3,00 % |
| Pflanzenschutzmittel | Schwefel | 0,80 % |

**Ausführungsbeispiel 4:**

| Komponente | Material | Gew. % |
|---|---|---|
| Trägermaterial | Gesteinsmehl | 73,00 % |
| Absorberprodukt, | Polyacrylamid | 11,00% |
| Quellstoff | Zellstoff | 10,00 % |
| Binde- und Gleitmittel | Glycerin | 5,00 % |
| Ergänzungsstoff | | 0,00 % |
| Düngemittel | Superphosphat | 1,00 % |
| Pflanzenschutzmittel | | 0,00 % |

**Ausführungsbeispiel 5:**

| Komponente | Material | Gew. % |
|---|---|---|
| Trägermaterial | Zeolith Gemisch | 37,00 % |
| Absorberprodukt | Polymer | 40,00 % |
| Quellstoff | Zellstoffpulver | 13,00 % |
| Binde- und Gleitmittel | Kleie | 2,00 % |
| Ergänzungsstoff | Mykorrhiza | 2,00 % |
| Düngemittel | Isodur Nitrogen | 4,00 % |
| Pflanzenschutzmittel | Schwefel | 2,00 % |

Die Ausführungsbeispiele zeigen mögliche Ausführungsvarianten des Bodenhilfsstoffes, wobei an dieser Stelle bemerkt sei, dass die Erfindung nicht auf die speziell angeführten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Die den eigenständigen erfinderischen Lösungen zugrunde liegende Aufgabe kann der Beschreibung entnommen werden.

## Patentansprüche

1. Bodenhilfsstoff zur Speicherung von Flüssigkeiten, insbesondere Wasser, umfassend zumindest ein Trägermaterial, das eine Gesteinsmehlmischung ist, ein Mineralgemisch ist oder aus einer einzigen Gesteinsmehlart gebildet ist, Absorberprodukt, Quellstoff, Bindemittel und Gleitmittel, gegebenenfalls ein Düngemittel, Ergänzungsstoffe, insbesondere mikrobiologischen oder mykotischen Ursprungs, sowie Pflanzenschutzmittel, **dadurch gekennzeichnet, dass** das Binde- und Gleitmittel Glycerin ist und dadurch die Bestandteile des Bodenhilfsstoffs kompaktierbar sind..

2. Bodenhilfsstoff nach Anspruch 1, **dadurch gekennzeichnet, dass** die Gesteinsmehlmischung, das Mineralgemisch oder die einzelne Gesteinsmehlart aus einer Gruppe umfassend Zeolith, Silikat, Urgesteinsmehl, Diabas, Lava, Feldspat, Plagioklas, Quarz, Biotit, Disthen, Granat, Silimanit, Aegirinaugit, Wollastonit, Calcit, Götzenit, Melanit, Apatit, Vermikulit und/oder Titanit ausgewählt ist bzw. insbesondere die Gesteinsmehlmischung aus einem Mineralgemisch aus Zeolith, Feldspat, insbesondere Alkalifeldspat, Aegirinaugit, Wollastonit, Calcit, Götzenit, Melanit, Apatit und/oder Titanit, Plagioklas, Quarz, Biotit und Disthen, Granat und/oder Silimanit gebildet ist.

3. Bodenhilfsstoff nach Anspruch 1 oder 2, **dadurch gekennzeichnet, dass** das Trägermaterial eine Korngröße bis zu einer oberen Grenze von 1 mm, vorzugsweise 0,8 mm, insbesondere 0,5 mm, aufweist und die Menge des Trägermaterials aus einem Bereich mit einer unteren Grenze von 10 %, vorzugsweise 25 %, insbesondere 30 %, und einer oberen Grenze von 90 %, vorzugsweise 85 %, insbesondere 75 %, ausgewählt ist.

4. Bodenhilfsstoffnach einem der Ansprüche 1 bis 3, **dadurch gekennzeichnet, dass** als Absorberprodukt quellfähige Produkte aus einer Gruppe umfassend quellfähige Zellstoffe, Silikatgel, Silikate, Polymere, Polyacrylamid und/oder Acrylsäure enthalten sind und die Menge des Absorberproduktes aus einem Bereich mit einer unteren Grenze von 0,1%, vorzugsweise 1 %, insbesondere 2 %, und einer oberen Grenze von 80 %, vorzugsweise 70 %, insbesondere 60 %, ausgewählt ist.

5. Bodenhilfsstoff nach einem der Ansprüche 1 bis 4, **dadurch gekennzeichnet, dass** der Quellstoff aus einer Gruppe umfassend Zellstoff, Zellstoffpulver, Holzspäne, Holzrinde, Hackschnitzel, Stroh, Chemiefasern, Vliese, Matten, Torf, Kokosfasern, Trester und/oder Polyurethan ausgewählt ist und die Menge des Quellstoffs aus einem Bereich mit einer unteren Grenze von 0,1%, vorzugsweise 1 %, insbesondere 2 %, und einer oberen Grenze von 30 %, vorzugsweise 20 %, insbesondere 15 %, ausgewählt ist.

6. Bodenhilfsstoff nach einem der Ansprüche 1 bis 5, **dadurch gekennzeichnet, dass** der Quellstoff faserförmig enthalten ist.

7. Bodenhilfsstoff nach einem der Ansprüche 1 bis 6, **dadurch gekennzeichnet, dass** das Binde- und Gleitmittel für Pflanzen nicht toxisch und bevorzugt natürlich abbaubar ist sowie geruchsarm ist.

8. Bodenhilfsstoff nach einem der Ansprüche 1 bis 7, **dadurch gekennzeichnet, dass** die Menge des Binde- und Gleitmittels aus einem Bereich mit einer unteren Grenze von 0,1%, vorzugsweise 1 %, insbesondere 2 %, und einer oberen Grenze von 20 %, vorzugsweise 15 %, insbesondere 10 %, ausgewählt ist.

9. Bodenhilfsstoff nach einem der Ansprüche 1 bis 8, **dadurch gekennzeichnet, dass** zumindest ein Ergänzungsstoff, insbesondere mikrobiologischen Ursprungs, wie Bakterien, oder mykotischen Ursprungs, wie Pilze, bzw. Substanzen davon enthalten sind, wobei zumindest ein Ergänzungsstoff, insbesondere aus Mineralstoffen und/oder Spurenelementen, ausgewählt aus einer Gruppe umfassend Aluminium, Eisen, Mangan, Magnesium, Natrium, Kalium, Phosphor, Zink und/oder Kupfer enthalten ist und die Menge des zumindest einen Ergänzungsstoffes aus einem Bereich mit einer unteren Grenze von 0,1 %, vorzugsweise 0,5 %, insbesondere 1 %, und einer oberen Grenze von 7 %, vorzugsweise 5 %, insbesondere 3 %, ausgewählt ist.

10. Bodenhilfsstof nach einem der Ansprüche 1 bis 9, **dadurch gekennzeichnet, dass** das zumindest eine Düngemittel ausgewählt aus einer Gruppe umfassend Ammoniumstickstoff (NH₄-N) und/oder Nitratstickstoff (NO₃-N), Aluminiumoxid, Eisenoxid, Calciumoxid, Asche, unlösliche Sulfate, Huminsäure, Nitrifikationshemmer, Superphosphat, organisch synthetische Langzeitdünger und/oder Kristallwasser enthalten ist, wobei die Menge des Düngemittels aus einem Bereich mit einer unteren Grenze von 0,1 %, vorzugsweise 0,5 %, insbesondere 1 %, und einer oberen Grenze von 10 %, vorzugsweise 5 %, insbesondere 3 %, ausgewählt ist.

11. Bodenhilfsstoff nach einem der Ansprüche 1 bis 8, **dadurch gekennzeichnet, dass** der Bodenhilfsstoff Partikel bildet, die einen mittleren Durchmesser ausgewählt aus einem Bereich mit einer unteren Grenze von 0,1 mm, vorzugsweise 0,2 mm, insbesondere 0,5 mm, und einer oberen Grenze von 10 mm, vorzugsweise 7 mm, insbesondere 5 mm, aufweisen.

12. Bodenhilfsstoff nach einem der Ansprüche 1 bis 9, **dadurch gekennzeichnet, dass** das mittlere Schüttgewicht aus einem Bereich mit einer unteren Grenze von 100 kg/m³, vorzugsweise 200 kg/m³, insbesondere 500 kg/m³, und einer oberen Grenze von 1000 kg/m³, vorzugsweise 900 kg/m³, insbesondere 800 kg/m³, ausgewählt ist.

13. Mischung mit dem Bodenhilfsstoffnach einem der Ansprüche 1 bis 12, **dadurch gekennzeichnet, dass** Bodenstrukturverbesserungssubstanzen ausgewählt aus einer Gruppe umfassend Lava-, Blähton-, Blähschieferbruch, in einer Menge aus einem Bereich mit einer unteren Grenze von 10 %, vorzugsweise 30 %, insbesondere 50 %, und einer oberen Grenze von 90 %, vorzugsweise 70 %, insbesondere 60 %, sowie Düngerstoffen organischer oder synthetisch-organischer Natur, in einer Menge aus einem Bereich mit einer unteren Grenze von 5 %, vorzugsweise 10 %, insbesondere 20 %, und einer oberen Grenze von 50 %, vorzugsweise 40 %, insbesondere 30 %, und eine Menge des Bodenhilfsstoffes aus einem Bereich mit einer unteren Grenze von 8 %, vorzugsweise 16 %, insbesondere 32 % und einer oberen Grenze von 50 %, vorzugsweise 40 %, insbesondere 35 %, vorzugsweise in einem abgestimmten Verhältnis, beigemengt sind.

14. Verfahren zur Herstellung des Bodenhilfsstoffes nach einem der Ansprüche 1 bis 12 umfassend die Schritte i) Vermischen bzw. Vermengen der Ingredienzien, nach einem der Ansprüche 1 bis 12, insbesondere homogen, vorzugsweise trocken, ii) Verpressen der Mischung, vorzugsweise unter Druck, insbesondere die Kompaktierung mittels Pelletierung, Walzenkompaktierung erfolgt, und iii) Granulierung der verpressten Mischung, insbesondere durch Zerkleinerung und anschließendem Brechen und Ausfiltern in ausgewählte Korngrößen, oder durch Auspressung durch zumindest eine Matrize, oder über eine Formpresse.

15. Verwendung des Bodenhilfsstoffes nach einem der Ansprüche 1 bis 12 in einer Konzentration von 0,1 bis 50 kg/m³ Boden.

## Claims

1. A soil additive for storing fluids, in particular water, comprising at least one carrier material, which is a rock dust mixture, a mineral mixture, or is formed from a single rock dust type, absorber product, swelling agent, binding agent and lubricating agent, optionally a fertiliser, supplements, in particular of microbiological or mycotic origin, and plant protection products, **characterised in that** the binding and lubricating agent is glycerol, and **in that** the constituents of the soil additive can be compacted.

2. The soil additive according to claim 1, **characterised in that** the rock dust mixture, the mineral mixture or the individual rock dust type is selected from a group comprising zeolite, silicate, primary rock dust, diabase, lava, feldspar, plagioclase, quartz, biotite, disthene, garnet, sillimanite, aegirine augite, wollastonite, calcite, götzenite, melanite, apatite, vermiculite and/or titanite, or in particular the rock dust mixture is formed from a mineral mixture of zeolite, feldspar, in particular alkali feldspar, aegirine augite, wollastonite, calcite, götzenite, melanite, apatite and/or titanite, plagioclase, quartz, biotite and disthene, garnet and/or sillimanite.

3. The soil additive according to claim 1 or 2, **characterised in that** the carrier material has a particle size up to a upper limit of 1 mm, preferably 0.8 mm, in particular 0.5 mm, and the quantity of the carrier material is selected from a range having a lower limit of 10 %, preferably 25 %, in particular 30 %, and an upper limit of 90 %, preferably 85 %, in particular 75 %.

4. The soil additive according to one of claims 1 to 3, **characterised in that** swellable products from a group comprising swellable pulps, silicate gel, silicates, polymers, polyacrylamide and/or acrylic acid are contained as absorber product and the quantity of the absorber product is selected from a range having a lower limit of 0.1 %, preferably 1 %, in particular 2 %, and an upper limit of 80 %, preferably 70 %, in particular 60 %.

5. The soil additive according to one of claims 1 to 4, **characterised in that** the swelling agent is selected from a group comprising pulp, pulp powder, wood shavings, wood bark, wood chips, straw, chemical fibres, non-wovens, mats, peat, coconut fibres, pomace and/or polyurethane, and the quantity of the swelling agent is selected from a range having a lower limit of 0.1 %, preferably 1 %, in particular 2 %, and an upper limit of 30 %, preferably 20 %, in particular 15 %.

6. The soil additive according to one of claims 1 to 5, **characterised in that** the swelling agent is contained in fibre form.

7. The soil additive according to one of claims 1 to 6, **characterized in that** the binding and lubricating agent is not toxic to plants and preferably is naturally degradable and has a low odour.

8. The soil additive according to one of claims 1 to 7, **characterised in that** the quantity of the binding and lubricating agent is selected from a range having a lower limit of 0.1 %, preferably 1 %, in particular 2 %, and an upper limit of 20 %, preferably 15 %, in particular 10 %.

9. The soil additive according to one of claims 1 to 8, **characterised in that** at least one supplement, in particular of microbiological origin, such as bacteria, or of mycotic origin, such as fungi, or substances thereof is/are contained, wherein at least one supplement, in particular formed from mineral materials and/or trace elements, selected from a group comprising aluminium, iron, manganese, magnesium, sodium, potassium, phosphorous, zinc and/or copper is contained, and the quantity of the at least one supplement is selected from a range having a lower limit of 0.1 %, preferably 0.5 %, in particular 1 %, and an upper limit of 7 %, preferably 5 %, in particular 3 %.

10. The soil additive according to one of claims 1 to 9, **characterised in that** the at least one fertiliser selected from a group comprising ammonium nitrogen (NH₄-N) and/or nitrate nitrogen (NO₃-N), aluminium oxide, iron oxide, calcium oxide, ash, insoluble sulphates, humic acid, nitrification inhibitor, superphosphate, organically synthetic long-term fertiliser and/or water of crystallisation is contained, wherein the quantity of the fertiliser is selected from a range having a lower limit of 0.1 %, preferably 0.5 %, in particular 1 %, and an upper limit of 10 %, preferably 5 %, in particular 3 %.

11. The soil additive according to one of claims 1 to 8, **characterised in that** the soil additive forms particles that have a mean diameter selected from a range having a lower limit of 0.1 mm, preferably 0.2 mm, in particular 0.5 mm, and an upper limit of 10 mm, preferably 7 mm, in particular 5 mm.

12. The soil additive according to one of claims 1 to 9, **characterised in that** the mean bulk weight is selected from a range having a lower limit of 100 kg/m³, preferably 200 kg/m³, in particular 500 kg/m³, and an upper limit of 1000 kg/m³, preferably 900 kg/m³, in particular 800 kg/m³.

13. A mixture containing the soil additive according to one of claims 1 to 12, **characterised in that** soil structure improvement substances are added, selected from a group comprising crushed lava, crushed expanded clay and crushed expanded shale, in a quantity from a range having a lower limit of 10 %, preferably 30 %, in particular 50 %, and an upper limit of 90 %, preferably 70 %, in particular 60 %, and also fertilisers of organic or synthetic-organic nature, in a quantity from a range having a lower limit of 5 %, preferably 10 %, in particular 20 %, and an upper limit of 50 %, preferably 40 %, in particular 30 %, and a quantity of the soil additive from a range having a lower limit of 8 %, preferably 16 %, in particular 32 %, and an upper limit of 50 %, preferably 40 %, in particular 35 %, preferably in a coordinated ratio.

14. A method for producing the soil additive according to one of claims 1 to 12, comprising the following steps: i) mixing or blending the ingredients according to one of claims 1 to 12, in particular homogeneously, preferably dry, ii) pressing the mixture, preferably under pressure, the compaction being produced in particular by means of pelletisation or roll compaction, and iii) granulating the pressed mixture, in particular by comminution and subsequent crushing and filtering out into selected particle sizes, or by extrusion through at least one die or via a compression mould.

15. Use of the soil additive according to one of claims 1 to 12 in a concentration from 0.1 to 50 kg/m³ of soil.

## Revendications

1. Adjuvant pour le sol, pour stocker des liquides, en particulier l'eau, comprenant au moins un matériau support, qui est un mélange de roches pulvérisées, un mélange de substances minérales, ou est constitué d'un type unique de roche pulvérisée, un produit absorbant, un agent de gonflement, un liant/lubrifiant, éventuellement un engrais, des compléments, en particulier d'origine microbiologique ou mycotique, ainsi que des produits phytosanitaires, **caractérisé en ce que** le liant/lubrifiant est le glycérol, et **en ce que** les constituants de l'adjuvant pour le sol sont compactables.

2. Adjuvant pour le sol selon la revendication 1, **caractérisé en ce que** le mélange de roches pulvérisées, le mélange de substances minérales, ou le type unique de roche pulvérisée, est choisi dans le groupe comprenant les zéolites, les silicates, les roches primaires pulvérisées, la diabase, la lave, le feldspath, la plagioclase, le quartz, la biotite, le disthène, le grenat, la silimanite, l'aégirinaugite, la wollastonite, la calcite, la götzénite, la mélanite, l'apatite, la vermiculite et/ou la titanite, ou en particulier le mélange de roches pulvérisées est formé d'un mélange de substances minérales comprenant les zéolites, le feldspath, en particulier le feldspath alcalin, l'aériginaugite, la wollastonite, la calcite, la götzénite, la mélanite, l'apatite et/ou la titanite, la plagioclase, le quartz, la biotite et le disthène, le grenat et/ou la silimanite.

3. Adjuvant pour le sol selon la revendication 1 ou 2, **caractérisé en ce que** le matériau support présente une granulométrie allant jusqu'à une limite supérieure de 1 mm, de préférence de 0,8 mm, en particulier de 0,5 mm, et que la quantité du matériau support est choisie dans une plage ayant une limite inférieure de 10 %, de préférence de 25 %, en particulier de 30 %, et une limite supérieure de 90 %, de préférence de 85 %, en particulier de 75 %.

4. Adjuvant pour le sol selon l'une des revendications 1 à 3, **caractérisé en ce qu'**il contient, en tant que produit absorbant, des produits pouvant gonfler, appartenant à un groupe comprenant les celluloses pouvant gonfler, le gel de silicate, les silicates, les polymères, le polyacrylamide et/ou l'acide acrylique, et que la quantité du produit absorbant est choisie dans une plage ayant une limite inférieure de 0,1 %, de préférence de 1 %, en particulier de 2 %, et une limite supérieure de 80 %, de préférence de 70 %, en particulier de 60 %.

5. Adjuvant pour le sol selon l'une des revendications 1 à 4, **caractérisé en ce que** l'agent de gonflement est choisi dans le groupe comprenant la cellulose, la poudre de cellulose, les planures, l'écorce de bois, les copeaux de bois, la paille, les fibres chimiques, les non-tissés, les mats, la tourbe, les fibres de coprah, le marc de raisin et/ou le polyuréthanne, et que la quantité de l'agent de gonflement est choisie dans une plage ayant une limite inférieure de 0,1 %, de préférence de 1 %, en particulier de 2 %, et une limite supérieure de 30 %, de préférence de 20 %, en particulier de 15 %.

6. Adjuvant pour le sol selon l'une des revendications 1 à 5, **caractérisé en ce que** l'agent de gonflement est présent sous forme de fibres.

7. Adjuvant pour le sol selon l'une des revendications 1 à 6, **caractérisé en ce que** le liant/lubrifiant est non toxique pour les plantes et de préférence est naturellement dégradable, et de même présente une faible odeur.

8. Adjuvant pour le sol selon l'une des revendications 1 à 7, **caractérisé en ce que** la quantité du liant/lubrifiant est choisie dans une plage ayant une limite inférieure de 0,1 %, de préférence de 1 %, en particulier de 2 %, et une limite supérieure de 20 %, de préférence de 15 %, en particulier de 10 %.

9. Adjuvant pour le sol selon l'une des revendications 1 à 8, **caractérisé en ce qu'**il contient au moins un complément, en particulier d'origine microbiologique, tel que des bactéries, ou d'origine mycotique, tel que des champignons, ainsi que des substances qui en dérivent, au moins un complément étant présent, constitué en particulier de substances minérales et/ou d'oligo-éléments choisis dans un groupe comprenant l'aluminium, le fer, le manganèse, le magnésium, le sodium, le potassium, le phosphore, le zinc et/ou le cuivre, et la quantité du ou des compléments étant choisie dans une plage ayant une limite inférieure de 0,1 %, de préférence de 0,5 %, en particulier de 1 %, et une limite supérieure de 7 %, de préférence de 5 %, en particulier de 3 %.

10. Adjuvant pour le sol selon l'une des revendications 1 à 9, **caractérisé en ce que** le ou les engrais sont choisis dans un groupe comprenant le nitrate d'ammonium (NH₄-N) et/ou l'azote-nitrate (NO₃-N), l'oxyde d'aluminium, l'oxyde de fer, l'oxyde de calcium, les cendres, les sulfates insolubles, l'acide humique, les inhibiteurs de nitrification, le superphosphate, les engrais synthétiques organiques à action lente et/ou l'eau de cristallisation, la quantité de l'engrais étant choisie dans une plage ayant une limite inférieure de 0,1 %, de préférence de 0,5 %, en particulier de 1 %, et une limite supérieure de 10 %, de préférence de 5 %, en particulier de 3 %.

11. Adjuvant pour le sol selon l'une des revendications 1 à 8, **caractérisé en ce que** l'adjuvant pour le sol forme des particules qui présentent un diamètre moyen choisi dans une plage ayant une limite inférieure de 0,1 mm, de préférence de 0,2 mm, en particulier de 0,5 mm, et une limite supérieure de 10 mm, de préférence de 7 mm, en particulier de 5 mm.

12. Adjuvant pour le sol selon l'une des revendications 1 à 9, **caractérisé en ce que** la masse volumique apparente moyenne est choisie dans une plage ayant une limite inférieure de 100 kg/m³, de préférence de 200 kg/m³, en particulier de 500 kg/m³, et une limite supérieure de 1000 kg/m³, de préférence de 900 kg/m³, en particulier de 800 kg/m³.

13. Mélange contenant l'adjuvant pour le sol selon l'une des revendications 1 à 12, **caractérisé en ce que** l'on mélange, selon une proportion appropriée, des substances pour l'amélioration de la structure du sol choisies dans un groupe comprenant les déchets de lave, d'argile expansée, de schiste expansé, en une quantité comprise dans une plage ayant une limite inférieure de 10 %, de préférence de 30 %, en particulier de 50 %, et une limite supérieure de 90 %, de préférence de 70 %, en particulier de 60 %, ainsi que des engrais de nature organique ou synthétique organique en une quantité comprise dans une plage ayant une limite inférieure de 5 %, de préférence de 10 %, en particulier de 20 %, et une limite supérieure de 50 %, de préférence de 40 %, en particulier de 30 %, et une quantité de l'adjuvant pour le sol comprise dans une plage ayant une limite inférieure de 8 %, de préférence de 16 %, en particulier de 32 %, et une limite supérieure de 50 %, de préférence de 40 %, en particulier de 35 %.

14. Procédé de fabrication d'un adjuvant pour le sol selon l'une des revendications 1 à 12, comprenant les étapes i) mélange ou combinaison des ingrédients selon l'une des revendications 1 à 12, en particulier jusqu'à homogénéité, de préférence jusqu'à siccité, ii) compression du mélange, en particulier sous pression, le compactage étant en particulier mis en oeuvre par pastillage, compactage au rouleau, et iii) granulation du mélange comprimé, en particulier par broyage, puis fragmentation et filtration pour obtenir des granulométries sélectionnées, ou par expression pour donner au moins une matrice, ou sur une presse à mouler.

15. Utilisation de l'adjuvant pour le sol selon l'une des revendications 1 à 12 à une concentration de 0,1 à 50 kg/m³ de sol.
